# EUROPEAN PATENT SPECIFICATION

(11) **EP 3 987 256 B1**
(45) Date of publication and mention of the grant of the patent: **08.11.2023**
(21) Application number: 20731900.5
(22) Date of filing: 16.06.2020
(51) Int. Cl.: G01H 1/00, G08B 13/04, G08B 13/08, G08B 13/16

(54) **SENSOR DEVICE COMPRISING A VIBRATION DETECTOR**
SENSORVORRICHTUNG MIT EINEM SCHWINGUNGSDETEKTOR
DISPOSITIF CAPTEUR COMPRENANT UN DÉTECTEUR DE VIBRATIONS

(30) Priority: 19.06.2019 EP 19181337
(43) Date of publication of application: 27.04.2022
(73) Proprietor: ASSA ABLOY AB, 107 23 Stockholm (SE)
(72) Inventor: JOHANSSON, Stefan, 112 36 Stockholm (SE); MACKEGÅRD, Per, 171 78 Solna (SE); JONSSON, Tomas, 144 62 Rönninge (SE); CEDERBLAD, Mats, 193 35 Sigtuna (SE)
(74) Representative: Kransell & Wennborg KB
(86) International application number: PCT/EP2020/066640
(87) International publication number: WO 2020/254330

(56) References cited:
- WO-A1-2014/014101
- US-A- 4 054 867
- US-A- 4 559 528
- US-A1- 2019 061 697
- US-B1- 10 089 851

## Description

### TECHNICAL FIELD

The present disclosure relates to the field of sensor devices and in particular to a sensor device comprising a vibration detector.

### BACKGROUND

Unfortunately, it is a continuous problem with break-ins and burglaries in homes and commercial properties. There are a number of sensors in the prior art to detect such break-ins. Some sensors detect when a window or door is opened or glass is broken and other sensors detect movement. US10089841 B1 discloses a glass break detector comprising an accelerometer attached to a windowpane.

However, the detection of a broken window is not trivial. Normal accelerometers, e.g. in window frames, do not provide data which is distinct enough from other events, such as an innocent ball bouncing on the window.

### SUMMARY

One objective is to provide a reliable and power efficient way to detect when a windowpane is shattered.

According to a first aspect, it is provided a sensor device according to claim 1.

The sensor controller can be separate from the vibration detector.

The sensor controller may be configured to send an alarm signal, when detecting, based on signals from the vibration detector, that the windowpane shatters.

The sensor controller may be configured to detect that the windowpane is broken based on filtering out vibrations of a frequency lower than a threshold frequency.

The threshold frequency may be at least 20 kHz.

The sensor controller may be configured to send an alarm signal when detecting that the connection with the vibration detector is broken.

The sensor device may further comprise a proximity detector connected to the sensor controller, in which case the sensor controller is configured to determine whether the window is open or closed based on the proximity detector.

According to a second aspect, it is provided a window comprising: a windowpane; and the sensor device according to the first aspect. In this case, the vibration detector of the sensor device is provided in contact with the windowpane.

The window may further comprise a window frame, wherein the sensor controller of the sensor device is attached to the window frame.

The window may further comprise a sash frame, wherein the sensor controller of the sensor device is attached to the sash frame.

The vibration detector of the sensor device may be attached to the windowpane.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic front view illustrating a window according to one embodiment; and
Fig 2 is a schematic diagram illustrating components of the sensor controller of Fig 1.

### DETAILED DESCRIPTION

The aspects of the present disclosure will now be described more fully hereinafter with reference to the accompanying drawings, in which certain embodiments of the invention are shown. These embodiments are provided by way of example so that this disclosure will be thorough and complete, and to fully convey the scope of all aspects of invention as defined by the appended claims to those skilled in the art. Like numbers refer to like elements throughout the description.

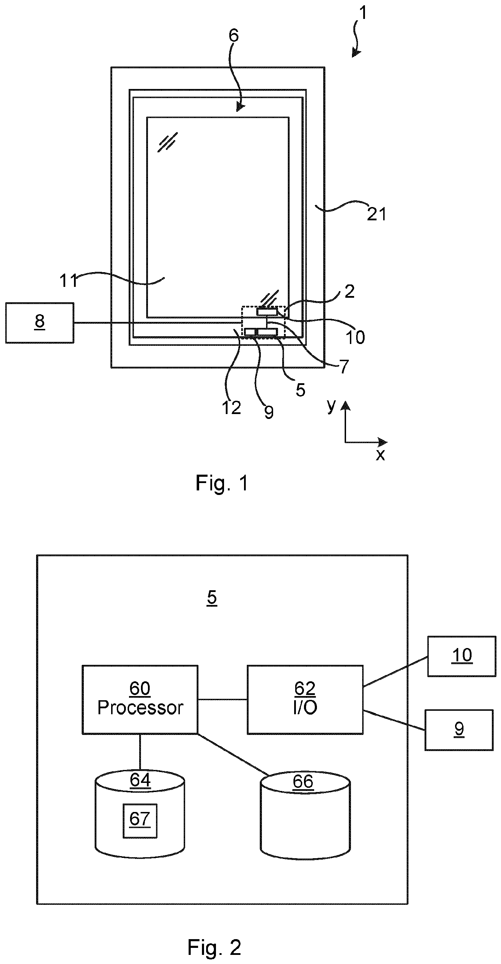

Fig 1 is a schematic front view illustrating a window 1 according to one embodiment. The window 1 comprises a window frame 21 and a window sash 6.

The window sash 6 can be, but is not necessarily, moveable (e.g. rotatable and/or linearly displaceable) in relation to the window frame 21 to allow the window to open. Optionally, the window sash 6 is rotatable in two ways, e.g. both along one side and along the bottom.

The window sash 6 comprises one or more windowpanes 11 and a sash frame 12 for fixating the windowpane(s) 11 in the window sash 6. The windowpanes 11 can be made of glass.

A sensor device 2 comprises a sensor controller 5 and a vibration detector 10 and a cable 7 provided between the sensor controller 5 and the vibration detector 10. The sensor controller is separate from the vibration detector.

The vibration detector 10 is provided in contact with the windowpane 11. For instance, the vibration detector 10 can be attached to the windowpane 11, e.g. using an adhesive. The vibrations detected by the vibration detector 10 can be used by the sensor controller 5 to detect when a windowpane is shattered. Since the vibration detector 10 is in contact with the windowpane, vibrations of sufficiently high frequencies are detectable, e.g. to distinguish between a ball bounce on the windowpane and a shattered windowpane. The shattered windowpane has much greater amplitude of higher frequencies (e.g. above 20-30 kHz) than the ball bounce.

The sensor controller 5 is attached to the window 1. For instance, the sensor controller 5 can be attached to the window frame 21 or the sash frame 12. If installed during production of the window, the sensor controller can be provided internally within the window frame 21 or sash frame 12. Alternatively, the sensor controller 5 can be provided attached to a surface of the window frame 21 or the sash frame 12.

The cable 7 between the sensor controller 5 and the vibration detector 10 can e.g. be a pair of copper wires. Optionally, at least part of the connection between the sensor controller 5 and the vibration detector 10 passes via one or more hinges, to reduce visible cabling.

The vibration detector 10 comprises a piezoelectric sensor. The vibration detector comprises an accelerometer. Many piezoelectric sensors need no electric power supply and is thus power efficient. An accelerometer is used to detect vibrations in a better way. To use the advantages of both sensor types, a combination of sensors can be used, where the piezoelectric sensor is used to wake up the accelerometer. In this way, the accelerometer does not need to perform any periodic polling to obtain vibration measurements, reducing idle power needs significantly. Moreover, this combination results in an extremely quick wake-up, since the piezoelectric sensor senses the vibration with negligible delay.

The piezoelectric sensor is configured to wake up the sensor controller 5 when a vibration is detected. In this way, the sensor controller 5 can be in a low power state, thus conserving energy and prolonging use of the sensor controller 5 without its battery running out of power.

The sensor controller 5 determines when the vibrations detected by the vibration detector 10 correspond to that the windowpane is shattered. This determination of the shattered windowpane can be based on filtering out vibrations of a frequency lower than a threshold frequency, i.e. high-pass filtering. The threshold frequency can be 20 kHz or higher, e.g. 30 kHz. The high-pass filtering can be performed in the vibration detector 10 and/or the high pass filtering can occur in the sensor controller 5 or any other suitable device. Many piezoelectric sensors have a peak sensitivity at a certain frequency. For instance, there are piezoelectric sensors having a peak sensitivity at 32 kHz, leading to an inherent high-pass filtering. This high-pass filtering makes it more reliable to distinguish between shattering glass and e.g. a ball bounce on the windowpane. A ball bounce on the windowpane also results in vibrations, but with lower main frequency components than shattering glass.

When a shattering windowpane is determined, the sensor controller 5 can send an alarm signal. The alarm signal can be a wireless signal to a home security system 8 which can take further action, e.g. to alert a user and/or security personnel. Alternatively or additionally, the sensor controller 5 can itself, or using locally connected output devices, emit audible and/or visible alerts when a windowpane shattering is detected.

Optionally, the sensor controller 5 is configured to send an alarm signal when detecting that the connection with the vibration detector 10 is broken. Such a broken connection would e.g. occur if the windowpane is removed, which is one way that a burglar could attempt to break in. Sometimes a burglar can attempt to break in by removing a cassette comprising several windowpanes, which also would be detected when the connection is broken.

Optionally, a proximity detector 9 is provided. The proximity sensor 9 can be based on any one or more of electrical capacity, electrical inductivity, infrared light, magnetism (e.g. a hall sensor), photocell, sonar, mechanical switch etc. The proximity detector is connected to the sensor controller 5. In this way, the sensor controller 5 can determine whether the window is open or closed based on the proximity detector 9. The proximity detector is provided attached to one of the sash frame 12 or the window frame 21, such that it can detect proximate presence of the other of the sash frame 12 or the window frame 21. In this way, the sensor controller 5 can determine the status of the window, e.g. closed, open, etc. In one embodiment, the proximity detector 9 and sensor controller 5 form part of a single device.

By providing the vibration detector 10 in contact with the windowpane, significantly higher frequencies can be detected compared to if the vibration detector were to be placed on e.g. the sash frame or window frame. This greatly improves the ability to correctly detect when the windowpane is shattered.

Fig 2 is a schematic diagram illustrating components of the sensor controller 5 of Fig 1. The sensor controller 5 comprises a processor 60, provided using any combination of one or more of a suitable central processing unit (CPU), multiprocessor, microcontroller, digital signal processor (DSP), capable of executing software instructions 67 stored in a memory 64. The processor 60 could alternatively be implemented using an application specific integrated circuit (ASIC), field programmable gate array (FPGA), etc.

The memory 64 can be any combination of random-access memory (RAM) and/or read-only memory (ROM). The memory 64 also comprises persistent storage, which, for example, can be any single one or combination of solid-state memory, magnetic memory, and optical memory.

A data memory 66 is also provided for reading and/or storing data during execution of software instructions in the processor 60. The data memory 66 can be any combination of RAM and/or ROM.

The sensor controller 5 further comprises a communication module 62 for communication with external entities. The communication module 62 can support any suitable proprietary or standardised wireless protocol, e.g. Bluetooth or Bluetooth Low Energy (BLE), ZigBee, any of the IEEE 802.11x standards (also known as WiFi), etc, and/or any suitable proprietary or standardised wire-based protocol, e.g. based on a serial interface (e.g. RS485, RS232), Universal Serial Bus (USB), Ethernet.

The sensor controller 5 is connected to the vibration detector 10 and optionally the proximity detector 9.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the scope and being indicated by the following claims.

## Claims

1. A sensor device (2) comprising:
a vibration detector (10) configured to be provided in contact with a windowpane (11) of a window (1) wherein the vibration detector (10) comprises an accelerometer;
a sensor controller (5);
a cable (7) between the vibration detector (10) and the sensor controller (5);
wherein the vibration detector (10) comprises a sensor that is configured to wake up the sensor controller (5) when a vibration is detected by the piezoelectric sensor;
**characterized in that** the sensor is a piezoelectric sensor, configured to wake up the accelerometer when a vibration is detected by the piezoelectric sensor; and
**in that** the sensor controller (5) of the sensor device (2) is configured to be attached to a window frame (21) of the window.

2. The sensor device (2) according to claim 1, wherein the sensor controller (5) is separate from the vibration detector (10).

3. The sensor device (2) according to any one of the preceding claims, wherein the sensor controller (5) is configured to send an alarm signal, when detecting, based on signals from the vibration detector (10), that the windowpane shatters.

4. The sensor device (2) according to claim 3, wherein the sensor controller is configured to detect that the windowpane is broken based on filtering out vibrations of a frequency lower than a threshold frequency.

5. The sensor device (2) according to claim 4, wherein the threshold frequency is at least 20 kHz.

6. The sensor device (2) according to any one of the preceding claims, wherein the sensor controller (5) is configured to send an alarm signal when detecting that the connection with the vibration detector (10) is broken.

7. The sensor device (2) according to any one of the preceding claims, further comprising a proximity detector (9) connected to the sensor controller (5), and wherein the sensor controller (5) is configured to determine whether the window is open or closed based on the proximity detector (9).

8. A window (1) comprising:
a windowpane (11);
the sensor device (2) according to any one of the preceding claims, wherein the vibration detector (10) of the sensor device (2) is provided in contact with the windowpane (11); and
a window frame (21).

9. The window (1) according to claim 8, wherein the sensor controller (5) of the sensor device (2) is attached to the window frame (21).

10. The window (1) according to claim 8, further comprising a sash frame (12), wherein the sensor controller (5) of the sensor device (2) is attached to the sash frame (12).

11. The window (1) according to any one of claims 8 to 10, wherein the vibration detector (10) of the sensor device (2) is attached to the windowpane (11).

## Patentansprüche

1. Sensorvorrichtung (2), die Folgendes umfasst:
einen Schwingungsdetektor (10), der dazu ausgelegt ist,
in Kontakt mit einer Fensterscheibe (11) eines Fensters (1) bereitgestellt zu werden, wobei der Schwingungsdetektor (10) einen Beschleunigungsmesser umfasst;
eine Sensorsteuerung (5);
ein Kabel (7) zwischen dem Schwingungsdetektor (10) und der Sensorsteuerung (5);
wobei der Schwingungsdetektor (10) einen Sensor umfasst, der dazu ausgelegt ist, die Sensorsteuerung (5) aufzuwecken, wenn eine Schwingung durch den piezoelektrischen Sensor detektiert wird;
**dadurch gekennzeichnet, dass** der Sensor ein piezoelektrischer Sensor ist, der dazu ausgelegt ist, den Beschleunigungsmesser aufzuwecken, wenn eine Schwingung durch den piezoelektrischen Sensor detektiert wird; und
dadurch, dass die Sensorsteuerung (5) der Sensorvorrichtung (2) dazu ausgelegt ist, an einem Fensterrahmen (21) des Fensters angebracht zu werden.

2. Sensorvorrichtung (2) nach Anspruch 1, wobei die Sensorsteuerung (5) von dem Schwingungsdetektor (10) getrennt ist.

3. Sensorvorrichtung (2) nach einem der vorhergehenden Ansprüche, wobei die Sensorsteuerung (5) dazu ausgelegt ist, ein Alarmsignal zu senden, wenn basierend auf Signalen von dem Schwingungsdetektor (10) detektiert wird, dass die Fensterscheibe zerbricht.

4. Sensorvorrichtung (2) nach Anspruch 3, wobei die Sensorsteuerung dazu ausgelegt ist, basierend auf einem Herausfiltern von Schwingungen einer Frequenz unterhalb einer Schwellenfrequenz zu detektieren, dass die Fensterscheibe zerbrochen ist.

5. Sensorvorrichtung (2) nach Anspruch 4, wobei die Schwellenfrequenz mindestens 20 kHz beträgt.

6. Sensorvorrichtung (2) nach einem der vorhergehenden Ansprüche, wobei die Sensorsteuerung (5) dazu ausgelegt ist, ein Alarmsignal zu senden, wenn detektiert wird, dass die Verbindung mit dem Schwingungsdetektor (10) unterbrochen ist.

7. Sensorvorrichtung (2) nach einem der vorhergehenden Ansprüche, ferner umfassend einen Näherungsdetektor (9), der mit der Sensorsteuerung (5) verbunden ist, und wobei die Sensorsteuerung (5) dazu ausgelegt ist, basierend auf dem Näherungsdetektor (9) zu bestimmen, ob das Fenster offen oder geschlossen ist.

8. Fenster (1), das Folgendes umfasst:
eine Fensterscheibe (11);
die Sensorvorrichtung (2) nach einem der vorhergehenden Ansprüche, wobei der Schwingungsdetektor (10) der Sensorvorrichtung (2) in Kontakt mit der Fensterscheibe (11) bereitgestellt ist; und
einen Fensterrahmen (21).

9. Fenster (1) nach Anspruch 8, wobei die Sensorsteuerung (5) der Sensorvorrichtung (2) an dem Fensterrahmen (21) angebracht ist.

10. Fenster (1) nach Anspruch 8, ferner umfassend einen Schieberahmen (12), wobei die Sensorsteuerung (5) der Sensorvorrichtung (2) an dem Schieberahmen (12) angebracht ist.

11. Fenster (1) nach einem der Ansprüche 8 bis 10, wobei der Schwingungsdetektor (10) der Sensorvorrichtung (2) an der Fensterscheibe (11) angebracht ist.

## Revendications

1. Dispositif capteur (2) comprenant :
un détecteur de vibrations (10) configuré pour être prévu en contact avec un carreau (11) d'une fenêtre (1), le détecteur de vibrations (10) comprenant un accéléromètre ;
un contrôleur de capteur (5) ;
un câble (7) entre le détecteur de vibrations (10) et le contrôleur de capteur (5) ;
le détecteur de vibrations (10) comprenant un capteur configuré pour réveiller le contrôleur de capteur (5) lorsqu'une vibration est détectée par le capteur piézoélectrique ;
**caractérisé en ce que** le capteur est un capteur piézoélectrique, configuré pour réveiller l'accéléromètre lorsqu'une vibration est détectée par le capteur piézoélectrique ; et
**en ce que** le contrôleur de capteur (5) du dispositif capteur (2) est configuré pour être fixé à un cadre (21) de fenêtre de la fenêtre.

2. Dispositif capteur (2) selon la revendications 1, le contrôleur de capteur (5) étant séparé du détecteur de vibrations (10).

3. Dispositif capteur (2) selon l'une quelconque des revendications précédentes, le contrôleur de capteur (5) étant configuré pour envoyer un signal d'alarme, lors de la détection, sur la base de signaux provenant du détecteur de vibrations (10), que le carreau se brise.

4. Dispositif capteur (2) selon la revendication 3, le contrôleur de capteur étant configuré pour détecter que le carreau est cassé sur la base de la filtration de vibrations d'une fréquence inférieure à une fréquence seuil.

5. Dispositif capteur (2) selon la revendication 4, la fréquence seuil étant d'au moins 20 kHz.

6. Dispositif capteur (2) selon l'une quelconque des revendications précédentes, le contrôleur de capteur (5) étant configuré pour envoyer un signal d'alarme lors de la détection que la connexion avec le détecteur de vibrations (10) est rompue.

7. Dispositif capteur (2) selon l'une quelconque des revendications précédentes, comprenant en outre un détecteur de proximité (9) connecté au contrôleur de capteur (5), et le contrôleur de capteur (5) étant configuré pour déterminer si la fenêtre est ouverte ou fermée sur la base du détecteur de proximité (9).

8. Fenêtre (1) comprenant :
un carreau (11) ;
le dispositif capteur (2) selon l'une quelconque des revendications précédentes, le détecteur de vibrations (10) du dispositif capteur (2) étant prévu en contact avec le carreau (11) ; et
un cadre (21) de fenêtre.

9. Fenêtre (1) selon la revendication 8, le contrôleur de capteur (5) du dispositif capteur (2) étant fixé au cadre (21) de fenêtre.

10. Fenêtre (1) selon la revendication 8, comprenant en outre un cadre de châssis (12),
le contrôleur de capteur (5) du dispositif capteur (2) étant fixé au cadre de châssis (12).

11. Fenêtre (1) selon l'une quelconque des revendications 8 à 10, le détecteur de vibrations (10) du dispositif capteur (2) étant fixé au carreau (11).
